# EUROPEAN PATENT SPECIFICATION

(11) **EP 2 944 491 B1**
(45) Date of publication and mention of the grant of the patent: **15.07.2020**
(21) Application number: 15168731.6
(22) Date of filing: 21.05.2015
(51) Int. Cl.: B60J 7/057, B60J 7/00

(54) **OPEN ROOF SYSTEM FOR A VEHICLE**
OFFENES DACHSYSTEM FÜR EIN FAHRZEUG
SYSTÈME DE TOIT OUVRANT POUR VÉHICULE

(30) Priority: 12.05.2014 US 201414274928
(43) Date of publication of application: 18.11.2015
(73) Proprietor: Inalfa Roof Systems Group B.V., 5804 AB Venray (NL)
(72) Inventor: NELLEN, Marcel Johan Christiaan, 5815 AR MERSELO (NL); MANDERS, Peter Christiaan Leonardus Johannes, 5961 GN Horst (NL)
(74) Representative: De Vries & Metman

(56) References cited:
- EP-A1- 2 674 312
- DE-A1- 10 227 028
- FR-A1- 2 960 477

## Description

Aspects of the invention relate to an open roof system for a vehicle according to the preamble of claim 1.

An open roof system of this type is disclosed in EP 2 674 312. This open roof system makes use of a flexible first part and an elongated second part. This second part is guided in a corresponding second guiding channel oriented substantially parallel to the first guiding channel in the lateral guide of the roof system.

The invention provides an open roof system having the features of claim 1.

By using flexible parts for the second elongated parts and by using curved second guiding channels, there is created a greater freedom in arranging the first and second movable parts and the corresponding drive cable assemblies. The first and second movable elements may be windable sunscreens, and wherein the motor is positioned substantially between the first and the second movable elements which are arranged side-by-side.

Aspects of the invention will hereafter be elucidated with reference to the drawings showing embodiments of the invention by way of example.
Fig. 1 is a schematic perspective view of a passenger car which is provided with an open roof system according to the prior art.
Fig. 2 is an enlarged schematic perspective view of the open roof system used in the car of Fig. 1.
Fig. 3 is a schematic perspective exploded view of the open roof system of Fig. 2.
Fig. 4 is a plan view of the open roof system according to Fig. 3, whereby the closure assembly of the open roof system is not shown for clarity reasons.
Fig. 5 - 8 are schematic plan views of embodiments of the open roof system according to the invention having two windable sunscreens positioned side-by-side.
Fig. 9 is an enlarged cross-section according to the line IX-IX in Fig. 8.
Fig. 10, 11 are enlarged plan views of a temporary connection between first and second parts of a drive cable assembly, in two positions.

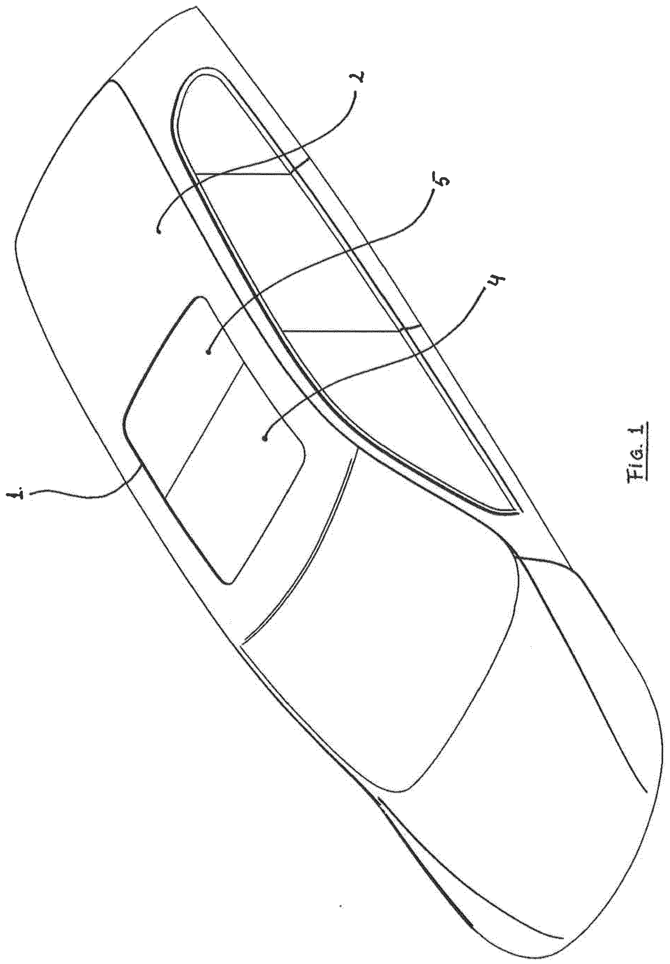

Referring to Fig. 1, a vehicle having an open roof system in its fixed roof 2 is illustrated schematically. Said open roof system comprises a roof opening 1 in a fixed roof 2 of the vehicle, such as a passenger car, and at least first and second closure elements 4, 5 for example glass or plastic, at least partly transparent panels as shown in Fig. 1. The first and second closure elements can be moved for closing and at least partially opening said roof opening 1 by means explained below.

Below the roof opening 1, not shown in Fig. 1, but elucidated hereafter, at least first and second movable elements 41, 51, 42, 52, 24 are arranged, here in the form of windable (flexible) sunscreens or rollo's, stackable (rigid) sunscreens or slides for a wind deflector, which are each movable between a position in which it is retracted, and a position in which it is deployed. Other first and second movable elements are conceivable.

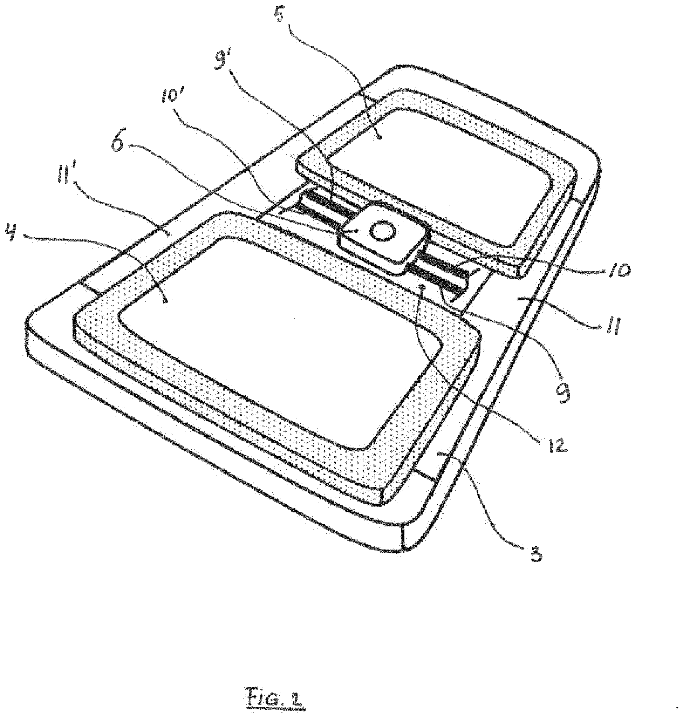

Referring to Fig. 2, an open roof system is schematically illustrated, comprising the first and second movable elements 4, 5, here a closure assembly, connected via a moving mechanism (not shown here), which is known per se, to a stationary part 3, particularly a frame, and further comprising a motor 6 and partly shown first guiding channels 9, 9', 10, 10'. The stationary part 3 comprises front and rear members and a center member 12, which are known per se, and not further elucidated and are connected to lateral extrusion guides 11, 11', and said stationary part 3 connects the open roof system with the body of the vehicle by means of the usual fixing concepts such as screwing, gluing or a combination of these fixing concepts. The motor 6 may be an electric motor with a gearwheel that transfers the motor torque to the movable elements 4, 5, 24, 41, 51, 42, 52, via the drive cable assemblies 7, 8, in a way known per se. In Fig. 2 the motor 6 is positioned on the center member 12, but it is conceivable that the motor 6 is positioned on the front or rear member of stationary part 3.

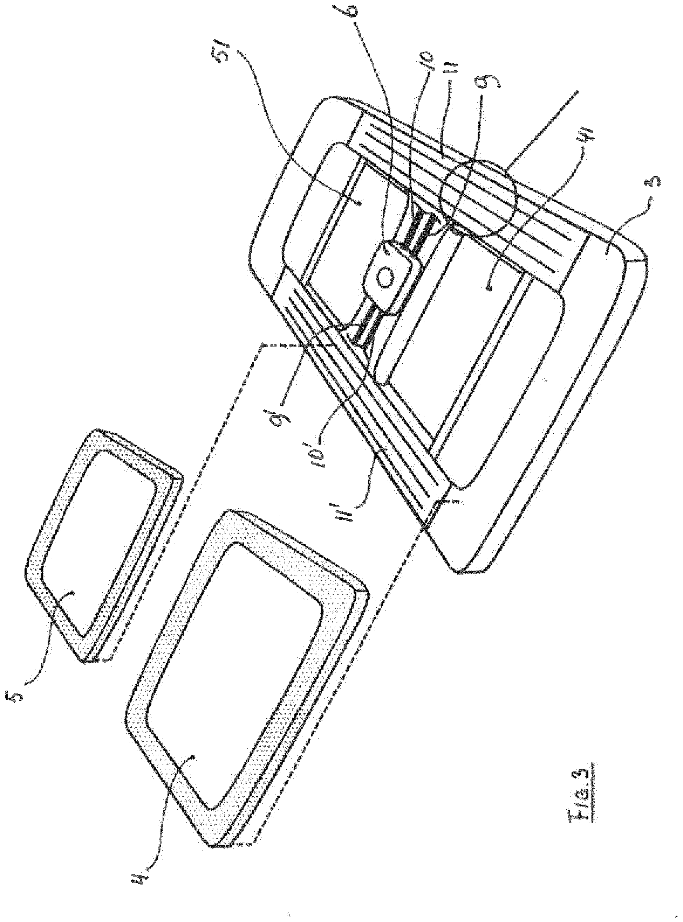

Referring to Fig. 3, an open roof system is illustrated schematically and partly in exploded view, such that the stationary part 3 and the first and second movable elements 41, 51, here windable sunscreens, are shown. The first and second movable elements 41, 51 are drawn in a partly deployed position. Each of these windable sunscreens comprise a flexible screen, said screen being connected on one longitudinal end to a winding shaft, and on its opposite longitudinal end to a movable operating beam 23. Said screen can be wound up onto, or unwound from the rotatable winding shaft in order to respectively deploy or retract the sunscreen. The winding shafts of each of said movable elements 41, 51 are fixed to the stationary part 3, and are positioned, seen in a longitudinal direction, adjacent to the motor 6. Said motor 6 is positioned on the center member 12 of stationary part 3, such that each of the movable elements 41, 51 can be deployed and or retracted in an opposite longitudinal direction.

The stationary part 3 comprises lateral extrusion guides 11, 11'. Said lateral guides 11, 11' comprise supporting channels for guiding the first and second movable elements 4, 5, 41, 51, 42, 52, 24, but said guides comprise also first and second guiding channels 9, 9', 10, 10', 17, 17' for guiding first and second drive cable assemblies 7, 8, and movable elements 4, 5, 24, 41, 51, 42, 52, said first and second guiding channels are oriented substantially parallel to each other along at least a part of their length.

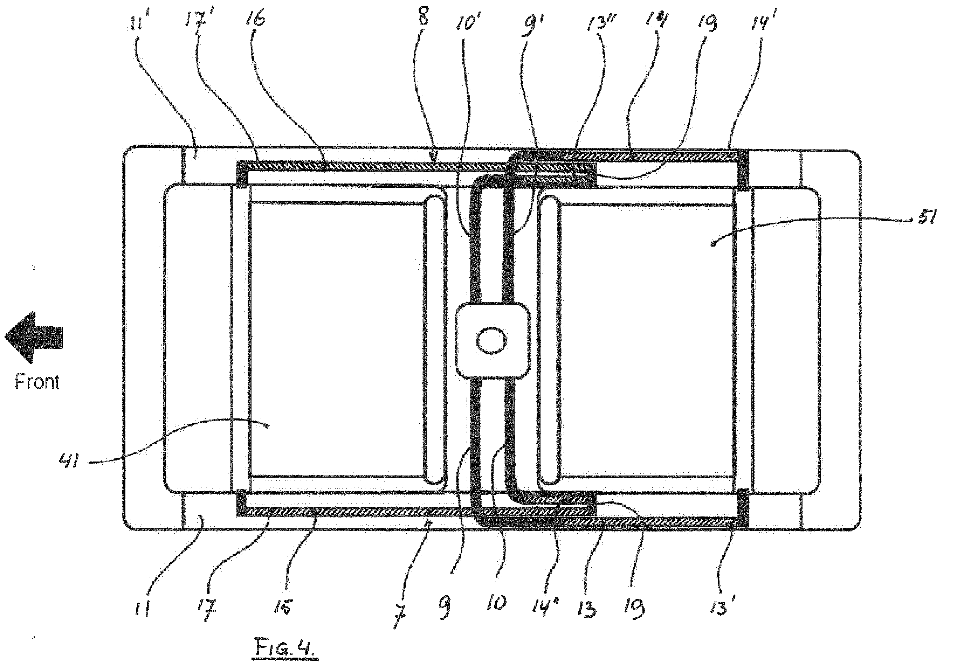

Fig. 4 shows only part of the open roof system, namely the stationary part 3, the first and second moveable members 41, 51, drawn in a partly deployed position, the motor 6, first and second guiding channels 9, 9', 10, 10', 17, 17, and schematically, shown by hatching in the drawing, part of the drive cable assemblies 7, 8, running in guiding channels 9, 9', 10, 10', 17, 17'. The first guiding channels 9, 9', 10, 10' guide the drive cable assemblies 7, 8 to and from the motor 6, said channels can be conceived as being steel pipes or channels incorporated in either of the front, center or rear members in a manner known per se, running from the motor to a connecting joint with the first channel, in the lateral guide 11, 11'.

The first and second drive cable assembly 7, 8 comprise flexible first parts 13, 14, having first ends 13', 14', and second ends 13", 14", and further second parts 15, 16 and a connecting part 19.

Each of the first parts 13, 14 of the drive cable assemblies is guided in the first guiding channels 9, 9'. Said first parts 13, 14 run from the position at which the gearwheel of the motor 6 is in driving engagement with the first part of the drive cable assembly 7, 8 in one direction through the first guiding channels 9, 9'. Via a connection joint they run from the first channels 9, 9' into the respective lateral guide, and along a lateral guiding channel, up to where the first parts 13, 14 are connected with their first end portions 13', 14' to the connecting part 19 of the first or second movable element 41, 51.

Each of the first parts 13, 14 runs in opposite direction from the end of the first end portion 13', 14', from the position at which the gearwheel of the motor 6 is in engagement with the drive cable assembly, through the first guiding channels 10, 10'. Via a connection joint they run from the channels 10, 10' into the respective lateral guide, and along a lateral guiding channel, up to where the first parts 13, 14 are connected with their second end portions 13", 14" to the connecting part 19.

The second parts 15, 16 of drive cable assembly 7, 8 are connected to the first parts 13, 14 by means of the connecting part 19, and said second parts 15, 16 run in second guiding channels 17, 17' in lateral guides 11, 11' from said connecting part 19 to a connecting part of the first or second movable element at an opposite end. Second parts 15, 16 may be a substantially stiff part, for example made of plastic material or a metal alloy.

When in Fig. 4 the motor 6 runs in clockwise direction, first and second movable elements 41, 51 will be retracted, that is the windable sunscreen cloth will be wound up onto the respective winding shafts. This can be explained as follows. First parts 13, 14 of drive cable assemblies 7, 8, which are connected with their first end portios 13', 14' to the movable operating beam 23 of the second moveable element 51, are driven by the clockwise turning motor in a direction such that the movable beam slides towards the winding shaft of movable element 51, and thus retracting the movable element 51.

Because the end of second end portions 13", 14" are positioned at the opposite end of first parts 13, 14, and also at the opposite side of motor 6, this end will move in longitudinally opposite, but substantially parallel direction compared to its first end portions 13', 14', and towards the first movable element 4, 24, 41, 42.

Second parts 15, 16 of drive cable assembly 7, 8 are connected to the second end portions 13", 14" of first parts 13, 14, so that second parts move in the same direction as said second end portions 13", 14", and said second parts 15, 16 are guided in a second guiding channel 17, 17 in a second direction towards the second movable element 5, 51, 52, and connected thereto. Thus, said second parts will move in a longitudinal direction opposite to the first parts when motor 6 runs in a clockwise direction. The movable operating beam 23 slides towards the winding shaft of movable element 41, and thus retracting the movable element 41 toward its open position. So by connecting the first parts 13, 14 to the second parts 15, 16 drive cable assemblies 7, 8 are created with which the two movable elements 41, 51 are driven by means of one motor.

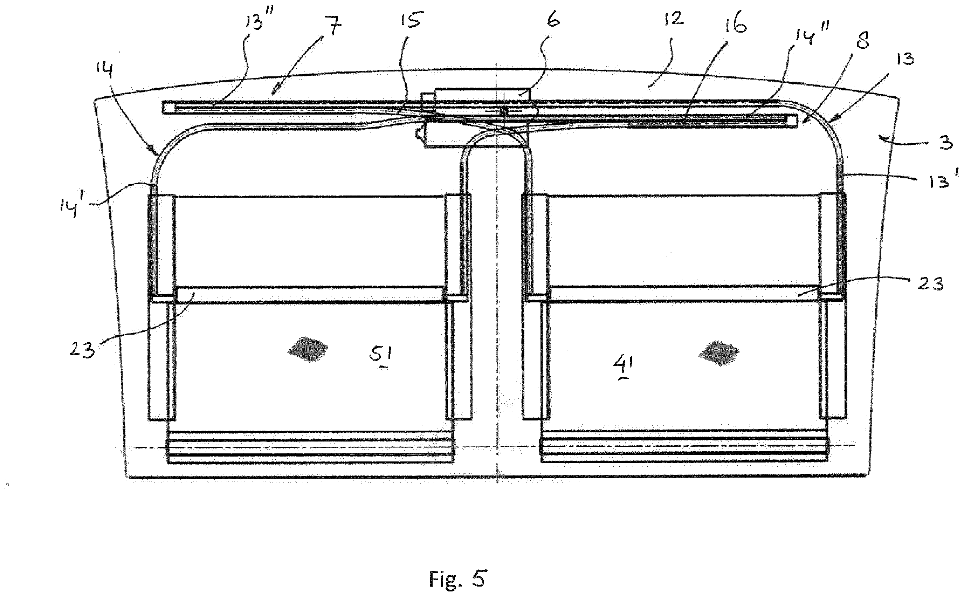

Fig. 5 shows a first embodiment of the open roof system according to the invention. In this embodiment each movable element in the form of windable sunshades 41, 51 is movable by means of the flexible first part 13, 14 and the elongated second part 15, 16 of the same drive cable assembly 7 or 8, respectively. This is particularly useful in this case where the two movable elements in the form of the sunshades 41, 51 are positioned side-by-side in relation to their direction of movement. The second end portions 13", 14" of the flexible first parts 13, 14 of both drive cable assemblies 7, 8 will then remain in a central transverse portion or beam 12 of the frame 3. The first end portion 13' of the flexible first part 13 of the first drive cable assembly 7 is connected to one of the ends of the operating beam 23 of the first windable sunscreen 41, and the elongated second part 15 of the first cable assembly 7 is connected to the opposite end of the operating beam 23 of this first windable sunscreen 41. The same is true for the second drive cable assembly 8, whose first end portion 14' of the flexible first part 14 is connected to the operating beam 23 of the second windable sunscreen 51 and the elongated second part 16 is connected to the opposite end of the operating beam 23 of the second windable sunscreen 51.

This embodiment is particularly favorable in view of tolerances as each drive cable assembly drives its own sunscreen.

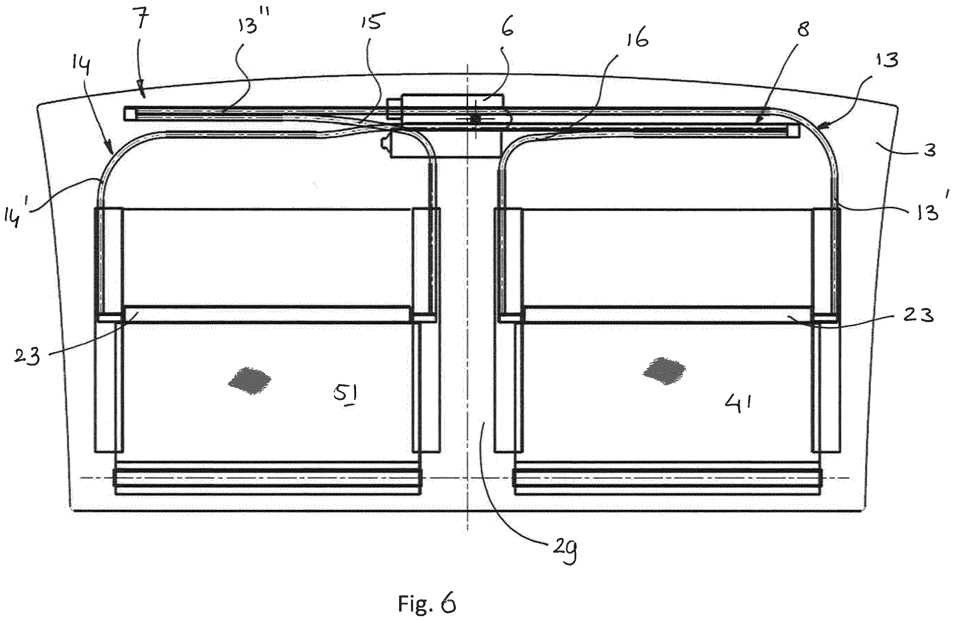

The embodiment of Fig. 6 is for the greater part similar to that of Fig. 5. Only the second parts 15, 16 of the first and second drive cable assemblies 7, 8 are switched so that the second part 15 of the first drive cable assembly 7 is connected to the operating beam 23 of the second windable sunscreen 51, while the elongated second part 16 of the second drive cable assembly 8 is connected to the operating beam 23 of the first windable sunscreen 41. Thus, in this embodiment, the movable parts, i.e. sunscreens, are driven by different parts of different drive cable assemblies.

This embodiment is optimized in view of cable lengths to limit friction, cost etc.

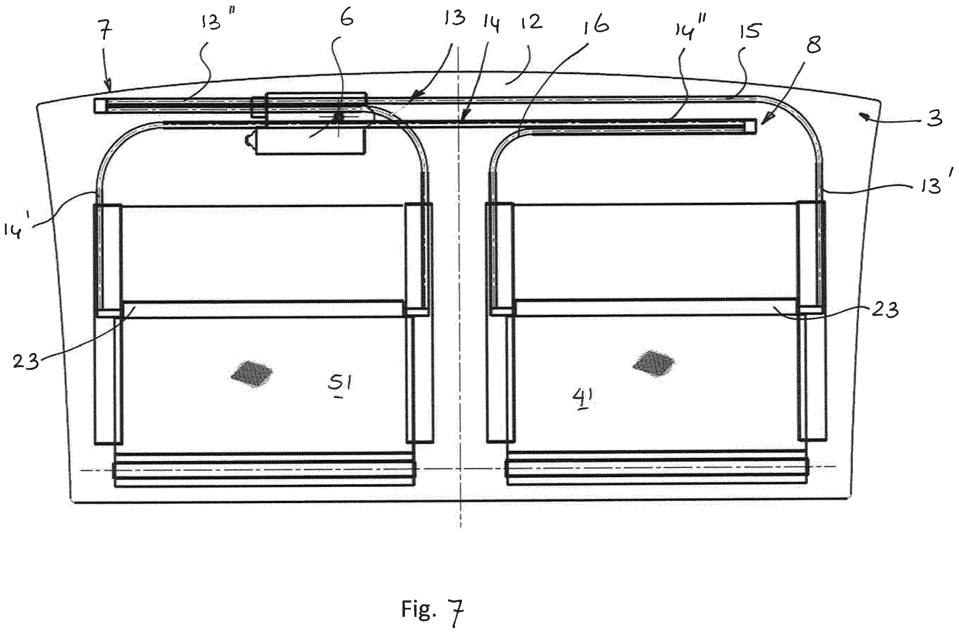

Fig. 7 shows another variation in which the cable paths are very similar to that of Fig. 6, but in which the motor 6 has been displaced such that the flexible first part 13 and the elongated second part 15 of the first drive cable assembly 7 have been switched due to the motor 6 driving just another part of the cable assembly 7. The part of the drive cable assembly 7, 8 that is engaged with the gear of motor 6 is the flexible first part 13, 14 and the part of the drive cable assembly 7, 8 that is connected or connectable to the flexible first part 13, 14 is the elongated second part 15, 16.

This embodiment is useful in situations where one movable element causes a higher resistance to the driving forces of the drive cable assembly than another one. The first end portions of the flexible first part can then be used to drive the movable element causing the higher resistance.

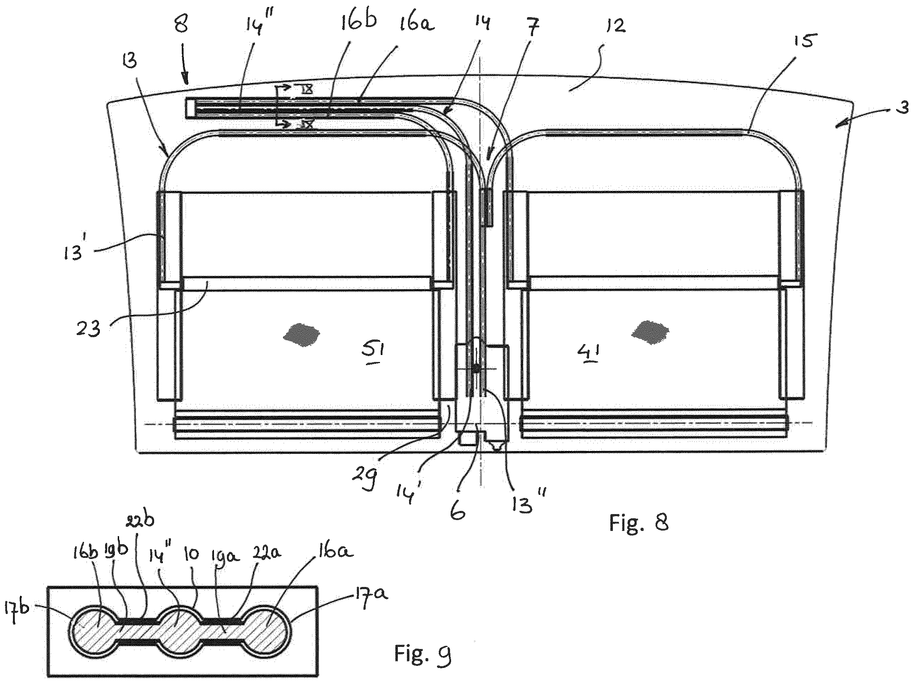

Fig. 8 shows an embodiment having different arrangements of the elongated second parts 15, 16. It also has a different position of the motor 6 which is now situated on a central longitudinal member or beam 29 of the frame 3 between the two windable sunscreens 41 and 51 which are again positioned side-by-side (with interposition of the longitudinal beam 29). The elongated second part 15 of the first drive cable assembly 7 is now connected to the first end portion 13' of the first flexible part 13 which drives the second movable part 15. This means that the second end portion 13" of the flexible first part 13 of the first drive cable assembly 7 has no function, but in principle it could be used to drive a third movable part, for example together with the second end portion 14' of the flexible first part 14 of the second drive cable assembly 8. As the elongated second part 15 of the first cable assembly 7 moves in the same direction as the flexible first part 13 of the first drive cable assembly 7, it could drive the same (first) movable part, but here it drives the second movable part or sunscreen 51.

The second end portion 14" of the flexible first part 14 of the second drive cable assembly 8 is now connected to two elongated second parts 16a, 16b, so in this embodiment, the flexible first part 14 is driven by motor 6, but is not directly connected to a movable part. But as already noted before, the first end part 14'of the flexible first part 14 of the second drive cable assembly 8 could be used to drive a third movable element. The elongated second parts 16a, 16b of the second drive cable assembly 8 are used to drive the two adjacent ends of the operating beams 23 of the two sunscreens 41, 51.

This embodiment is particularly advantageous in case the motor is positioned between the movable elements positioned side-by-side and to prevent small radii in the cable parts.

Fig. 9 shows how the second end portion 14" of the flexible first part 14 and the two elongated second parts 16a, 16b of the second drive cable assembly 8 are guided in parallel guiding channels 10, 17a, 17b and are fixedly connected to each other to transmit the driving force of the flexible first part 14 to the elongated second parts 16a, 16b by connecting parts 19a, 19b extending through narrow openings 22a, 22b.

It is noted that in general the guiding channels 10, 10' and 17, 17' for the second end portions 13", 14" of the flexible first parts 13, 14 and for the elongated second parts 15, 16 extend substantially parallel and side-by-side to each other at least along the length of travel of the continuous or temporary connection 19, 27. Only when the connection 19, 27 would be adjustable in length in a direction connecting the guiding channels it would allow a diversion of the guiding channels from these parallel paths.

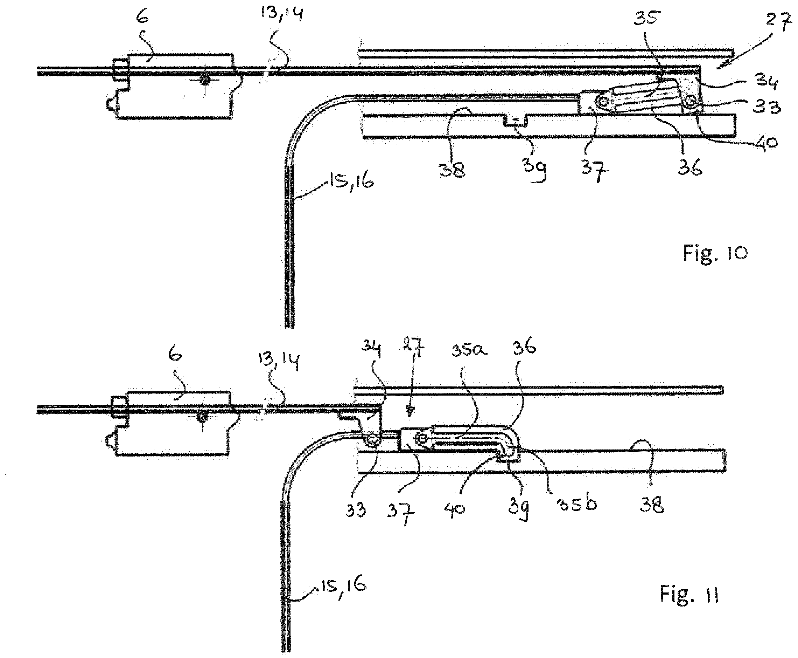

Fig. 10 and 11 show a temporary connection 27 between the flexible first part 13, 14 and the elongated second part 15, 16. The temporary connection 27 here includes a pin-slot connection and a forcing guide either preventing or enabling a connection/disconnection between the flexible first part 13, 14 and the elongated second part 15, 16. The pin-slot connection comprises a pin 33 on a mount 34 to the flexible first part 13, 14. The pin 33 is configured to engage in and be disengaged from a slot 35 provided in a slide 36 which is pivotably connected to a mount 37 fixed to the elongated second part 15, 16. The pivotable slide 36 is biased toward a guide surface 38 which includes a recess 39 in which a protrusion 40 of the slot slide 36 can engage. The slot 35 comprises a straight first slot portion 35a extending parallel to the guide surface 38 when the protrusion 40 engages the recess 39 and comprises a short second slot portion 35b at an angle to the first slot portion 35a and at an angle to the guide surface 38 when the first and second cable parts 13, 15 or 14, 16 are connected by the temporary connection 27.

Fig. 10 shows the flexible first part 13, 14 and the elongated second part 15, 16 in connected condition. The pin 33 is engaged in the second slot portion 35b and the protrusion 40 is in contact with the guide surface 38 preventing a rotation of the slot slide 36 and thereby preventing the pin 33 from leaving the second slot portion 35b as the flexible first part 13, 14 and the pin 33 fixed to it cannot move in a direction away from the guide surface 38. Thus, the elongated second part 15, 16 moves with the flexible first part 13, 14 and thus drives the movable part to which it is connected. As soon as the protrusion 40 of the slot slide 36 arrives at the recess 39 in the guide surface 38, the protrusion 40 is urged into the recess 39 by a spring biasing force from a spring (not shown) connecting the mount 37 to the protrusion 40 such as but not limited to a torsion, tension, compression or leaf spring suitably connected to provide the spring bias force (or alternatively by the shape of the guide guiding the slide 36) and, due to this rotation, the second slot portion 35b moves relative to the pin 33, such that the pin 33 arrives in the first slot portion 35a which then extends parallel to the guide surface 38 and parallel to the direction of movement of the pin 33 so that the pin 33 moves through the first slot portion 35a and finally out of the slot 35. Thus, while the flexible first part 13, 14 continues to move, the elongated second part 15, 16 stops moving and is kept stationary until the pin 33 is back at the entrance of the second slot portion 35b to move the protrusion 40 out of the recess 39 and thereby restore the connection between the flexible first part 13, 14 and the elongated second part 15, 16 and disengage the lock between the slot slide 36 and the guide surface 38 and thereby the lock between elongated second part 15, 16 and the stationary part 3.

From the foregoing it will be clear that the invention provides an open roof system which has a solution for driving at least two movable elements which is cost effective and technically favorable. The invention offers many possibilities to arrange and combine drive cable assemblies to adapt to positions of the motor, positions and relative directions of movement of movable parts, and guide channel routings and radii.

The invention is not limited to the embodiments shown in the drawing and described herein before, which may be varied in different manners within the scope of the appended claims. Aspects of different embodiments may be used in other combinations to create further drive cable arrangements for example.

For example, it is possible that at least one of the elongated second parts of the cable assembly is connected, either fixedly or through a temporary connection or coupling, to a further elongated second part (or third part etc.). It is also possible that elongated second parts are connected or connectable to both the first and second end portions of the flexible first part of the first and/or second drive cable assembly. Although generally two cable parts are used to drive a movable part, it is conceivable that only one cable part is required to drive a movable part, for example, if the movable part is not guided in two (lateral) guides, but in one (central) guide. The total number of cable parts could then be uneven.

## Claims

1. An open roof system for a vehicle having an opening (1) in its fixed roof (2), comprising:
a stationary part (3) configured to be fixed to the roof,
at least first and second movable elements (41,51), which are each movable between a retracted position and a deployed position,
a motor (6) configured to drive the movable elements (41,51) at least partly between the retracted and deployed positions,
at least first and second drive cable assemblies (7,8) configured to transfer torque of the motor (6) to said movable elements (41,51), wherein the stationary part (3) comprises at least first and second guiding channels (9,9',10,10',17,17') and guides (11) for respectively guiding the drive cable assemblies (7,8) and the movable elements (41,51), whereby the first and second drive cable assemblies (7,8) comprise a flexible first part (13,14) having first and second end portions (13',13"14',14"), said flexible first part (13,14) being driven by the motor (6), such that said first end portion (13',14') of said flexible first part (13,14) is on one side of the motor (6) and the second end portion (13",14") is on the other side of the motor (6) and said second end portion (13",14") is guided in a first guiding channel (9,9',10,10'), wherein at least one of the first and second drive cable assemblies (7,8) further comprises at least one elongated second part (15,16), guided in a second guiding channel (17,17'), wherein at least a part of the second guiding channel (17,17') extends side-by-side to the first guiding channel (9,9',10,10'), and wherein, during at least part of the operation, said elongated second part (15,16) is driven by and is moved substantially in the same direction as the second end portion (13",14") of the first part (13,14) of the cable assembly (7,8) at a position where the first and second guiding channels (9,9',10,10',17,17') extend side-by-side, and wherein said first flexible parts (13,14) and the second elongated parts (15,16) of the first and second drive cable assemblies (7,8) together drive said at least first and second movable elements (41,51), **characterized in that** the first and second movable elements (41,51) are positioned side-by-side in relation to their direction of movement and **in that** the second elongated parts (15,16) of the first and second drive cable assemblies (7,8), which are also flexible parts, are guided through the second guiding channels (17,17') which extend through a curved path, wherein the first and second guiding channels (9,9',10,10',17,17') of at least one of the drive cable assemblies (7, 8) extend side-by-side in a transverse portion of the stationary part (3).

2. The open roof system according to claim 1, wherein the first and second drive cable assemblies (7,8) each have a flexible first part (13,14) and at least one elongated second part (15,16).

3. The open roof system according to claim 1, wherein the first end portion (13',14') of the flexible first part (13,14) of the first drive cable assembly (7) is connected to one of the first and second movable elements (41,51), and wherein the second end portion (13",14") of the flexible first part (13,14) is connected, at least during part of the operation, to the at least one elongated second part (15,16) which is connected to one of the first and second movable parts (41,51). (Fig. 5, 6

4. The open roof system according to claim 3, wherein the flexible first parts (13,14) of the first and second drive cable assemblies (7,8) are connected to the first movable element (41) and the elongated second parts (15,16) of the first and second drive cable assemblies (7,8) are connected to the second movable element (51).

5. The open roof system according to claim 3, wherein the flexible first part (13,14) and the second part (15,16) of each of the first and second drive cable assemblies (7,8) is connected to one of the movable elements (41,51).

6. The open roof system according to claim 3, wherein the flexible first part (13,14) of the first drive cable assembly (7) and the elongated second part (15,16) of the second drive cable assembly (8) is connected to one of the movable elements (41,51).

7. The open roof system according to claim 1, wherein the flexible first part (13,14) of the first drive cable assembly (7) is connected, during at least a part of the operation, to at least two elongated second parts (15,16).

8. The open roof system according to claim 7, wherein the at least two elongated second parts (15,16) are connected to the end of the first end portion (13',14') of the flexible first part (13,14).

9. The open roof system according to claim 1, wherein the first end portion (13',14') of the flexible first part (13,14) of the first drive cable assembly (7) is connected to one of the first and second movable elements (41,51), and wherein the first end portion (13',14') of the flexible first part (13,14) of the second drive cable assembly (8) is connected, at least during part of the operation, to the at least one elongated second part (15,16) which is connected to one of the first and second movable parts (41,51).

10. The open roof system according to any of the preceding claims, wherein the motor (6) is positioned substantially in between the first and the second movable elements (41,51).

11. The open roof system according to any of the preceding claims, wherein the at least first and second movable elements (41,51) are windable sunscreens or stackable sunscreens.

12. The open roof system according to claim 1, wherein the elongated second part (15,16) of the drive cable assembly (7,8) is separate from the first part (13,14) and wherein the elongated second part (15,16) is temporarily connected to the flexible first part (13,14) by a temporary connecting part (27), such that during a movement between two positions of the first movable element (41), the second elongated part (15,16) is disconnected from the flexible first part (13,14), such that the second moveable element (51) is substantially stationary, the temporary connecting part (27) including a pin-slot connection and a forcing guide either preventing or enabling a connection/disconnection between the flexible first part (13,14) and the elongated second part (15,16).

## Patentansprüche

1. Offendachsystem für ein Fahrzeug, das in seinem Festdach (2) eine Öffnung hat, aufweisend:
einen stationären Teil (3), der konfiguriert ist, um an dem Dach befestigt zu sein,
wenigstens ein erstes und ein zweites bewegbares Element (41, 51), welche jeweils bewegbar sind zwischen einer Einfahrposition und einer Ausfahrposition,
einen Motor (6), der konfiguriert ist, um die bewegbaren Elemente (41, 51) wenigstens teilweise zwischen der Einfahrposition und der Ausfahrposition anzutreiben, wenigstens eine erste und eine zweite Antriebsseileinrichtung (7, 8), die konfiguriert sind, um Drehmoment des Motors (6) auf die bewegbaren Elemente (41, 51) zu übertragen, wobei der stationäre Teil (3) aufweist wenigstens einen ersten und einen zweiten Führungskanal (9, 9', 10, 10', 17, 17') und Führungen (11) zum jeweiligen Führen der Antriebsseileinrichtungen (7, 8) und der bewegbaren Elemente (41, 51), wobei die erste und die zweite Antriebsseileinrichtung (7, 8) aufweisen einen flexiblen, ersten Teil (13, 14), der einen ersten und einen zweiten Endabschnitt (13', 13"14', 14") hat, wobei der flexible, erste Teil (13, 14) von dem Motor (6) angetrieben wird, sodass der erste Endabschnitt (13', 14') des flexiblen, ersten Teils (13, 14) auf einer Seite des Motors (6) ist und der zweite Endabschnitt (13", 14") auf der anderen Seite des Motors (6) ist und der zweite Endabschnitt (13", 14") in einem ersten Führungskanal (9, 9', 10, 10') geführt ist, wobei wenigstens eine von der ersten und der zweiten Antriebsseileinrichtung (7, 8) ferner aufweist wenigstens einen langgestreckten, zweiten Teil (15, 16), der in einem zweiten Führungskanal (17, 17') geführt ist, wobei wenigstens ein Teil des zweiten Führungskanals (17, 17') sich Seite-an-Seite zu dem ersten Führungskanal (9, 9', 10, 10') erstreckt, und wobei der langgestreckte, zweite Teil (15, 16) während wenigstens eines Teils des Betriebs angetrieben ist von und bewegt ist im Wesentlichen in der gleichen Richtung wie der zweite Endabschnitt (13", 14") des ersten Teils (13, 14) der Seileinrichtung (7, 8) an einer Position, wo der erste und der zweite Führungskanal (9, 9', 10, 10', 17, 17') sich Seite-an-Seite erstrecken, und wobei die ersten, flexiblen Teile (13, 14) und die zweiten, langgestreckten Teile (15, 16) der ersten und der zweiten Antriebsseileinrichtung (7, 8) zusammen wenigstens das erste und das zweite bewegbare Element (41, 51) antreiben, **dadurch gekennzeichnet, dass** das erste und das zweite bewegbare Element (41, 51) Seite-an-Seite positioniert sind bezüglich ihrer Bewegungsrichtung und dass die zweiten, langgestreckten Teile (15, 16) der ersten und der zweiten Antriebsseileinrichtung (7, 8), welche ebenfalls flexible Teile sind, durch die zweiten Führungskanäle (17, 17') geführt sind, die sich durch einen gekrümmten Weg hindurch erstrecken, wobei der erste und der zweiten Führungskanal (9, 9', 10, 10', 17, 17') wenigstens einer der Antriebsseileinrichtungen (7, 8) sich Seite-an-Seite in einer Querrichtung des stationären Teils (3) erstrecken.

2. Offendachsystem gemäß Anspruch 1, wobei die erste und die zweite Antriebsseileinrichtung (7, 8) jeweils einen flexiblen, ersten Teil (13, 14) und wenigstens einen langgestreckten, zweiten Teil (15, 15) haben.

3. Offendachsystem gemäß Anspruch 1, wobei der erste Endabschnitt (13', 14') des flexiblen, ersten Teils (13, 14) der ersten Antriebseinrichtung (7) verbunden ist mit einem von dem ersten und dem zweiten bewegbaren Element (41, 51), und wobei der zweite Endabschnitt (13", 14") des flexiblen, ersten Teils (13, 14) verbunden ist, zumindest während eines Teils des Betriebs, mit dem wenigstens einen langgestreckten, zweiten Teil (15, 16), welcher mit einem von dem ersten und dem zweiten bewegbaren Teil (41, 51) verbunden ist. (Fig. 5, 6

4. Offendachsystem gemäß Anspruch 3, wobei die flexiblen, ersten Teile (13, 14) der ersten und der zweiten Antriebsseileinrichtung (7, 8) verbunden sind mit dem ersten bewegbaren Element (41) und die langgestreckten, zweiten Teile (15, 16) der ersten und der zweiten Antriebsseileinrichtung (7, 8) verbunden sind mit dem zweiten bewegbaren Element (51).

5. Offendachsystem gemäß Anspruch 3, wobei der flexible, erste Teil (13, 14) und der zweite Teil (15, 16) von jeder der ersten und der zweiten Antriebsseileinrichtung (7, 8) verbunden ist mit einem von den bewegbaren Elementen (41, 51).

6. Offendachsystem gemäß Anspruch 3, wobei der flexible, erste Teil (13, 14) der ersten Antriebsseileinrichtung (7) und der langgestreckte, zweite Teil (15, 16) der zweiten Antriebsseileinrichtung (8) verbunden ist mit einem von den bewegbaren Elementen (41, 51).

7. Offendachsystem gemäß Anspruch 1, wobei der flexible, erste Teil (13, 14) der ersten Antriebsseileinrichtung (7) verbunden ist, während wenigstens eines Teils des Betriebs, mit wenigstens zwei langgestreckten, zweiten Teilen (15, 16).

8. Offendachsystem gemäß Anspruch 7, wobei die wenigstens zwei langgestreckten, zweiten Teile (15, 16) verbunden sind mit dem Ende des ersten Endabschnitts (13', 14') des flexiblen, ersten Teils (13, 14).

9. Offendachsystem gemäß Anspruch 1, wobei der erste Endabschnitt (13', 14') des flexiblen, ersten Teils (13, 14) der ersten Antriebsseileinrichtung (7) verbunden ist mit dem ersten und dem zweiten bewegbaren Element (41, 51), und wobei der erste Endabschnitt (13', 14') des flexiblen, ersten Teils (13, 14) der zweiten Antriebsseileinrichtung (8) verbunden ist, zumindest während eines Teils des Betriebs, mit dem wenigstens einen langgestreckten, zweiten Teil (15, 16), welcher verbunden ist mit einem von dem ersten und dem zweiten bewegbaren Teil (41, 51).

10. Offendachsystem gemäß irgendeinem der vorigen Ansprüche, wobei der Motor (6) positioniert ist im Wesentlichen zwischen dem ersten und dem zweiten bewegbaren Element (41, 51).

11. Offendachsystem gemäß irgendeinem der vorigen Ansprüche, wobei das wenigstens erste und zweite bewegbare Element (41, 51) aufwickelbare Sonnenblenden oder stapelbare Sonnenblenden sind.

12. Offendachsystem gemäß Anspruch 1, wobei der langgestreckte, zweite Teil (15, 16) der Antriebsseileinrichtung (7, 8) separat ist von dem ersten Teil (13, 14), und wobei der langgestreckte, zweite Teil (15, 16) temporär verbunden ist mit dem flexiblen, ersten Teil (13, 14) durch einen temporären verbindenden Teil (27), sodass während einer Bewegung zwischen zwei Position des ersten bewegbaren Elements (41) der zweite, langgestreckte Teil (15, 16) entkuppelt wird von dem flexiblen, ersten Teil (13, 14), sodass das zweite bewegbare Element (51) im Wesentlichen stationär ist, wobei der temporäre verbindende Teil (27) aufweist eine Stift-Schlitz-Verbindung und eine Zwangsführung, die entweder verhindert oder erlaubt eine Verbindung/Entkupplung zwischen dem flexiblen, ersten Teil (13, 14) und dem langgestreckten, zweiten Teil (15, 16).

## Revendications

1. Système de toit ouvrant pour un véhicule ayant une ouverture (1) dans son toit fixe (2), comprenant :
une partie statique (3) configurée pour être fixée au toit,
au moins des premier et second éléments mobiles (41, 51), qui sont chacun mobiles entre une position rétractée et une position déployée,
un moteur (6) configuré pour entraîner les éléments mobiles (41, 51) au moins partiellement entre les positions rétractée et déployée,
au moins des premier et second ensembles de câble d'entraînement (7, 8) configurés pour transférer un couple du moteur (6) auxdits éléments mobiles (41, 51), dans lequel la partie statique (3) comprend au moins des premier et second canaux de guidage (9, 9', 10, 10', 17, 17') et des guides (11) pour guider respectivement les ensembles de câble d'entraînement (7, 8) et les éléments mobiles (41, 51), moyennant quoi les premier et second ensembles de câble d'entraînement (7, 8) comprennent une première partie flexible (13, 14) ayant des première et seconde portions d'extrémité (13', 13", 14', 14"), ladite première partie flexible (13, 14) étant entraînée par le moteur (6), de sorte que ladite première portion d'extrémité (13', 14') de ladite première partie flexible (13, 14) se trouve sur un côté du moteur (6) et que la seconde portion d'extrémité (13", 14") se trouve sur l'autre côté du moteur (6) et que ladite seconde portion d'extrémité (13", 14") soit guidée dans un premier canal de guidage (9, 9', 10, 10'), dans lequel au moins l'un des premier et second ensembles de câble d'entraînement (7, 8) comprend en outre au moins une seconde partie allongée (15, 16), guidée dans un second canal de guidage (17, 17'), dans lequel au moins une partie du second canal de guidage (17, 17') s'étend côte à côte par rapport au premier canal de guidage (9, 9', 10, 10'), et dans lequel, pendant au moins une partie du fonctionnement, ladite seconde partie allongée (15, 16) est entraînée par et déplacée sensiblement dans la même direction que la seconde portion d'extrémité (13", 14") de la première partie (13, 14) de l'ensemble de câble (7, 8) à une position où les premier et second canaux de guidage (9, 9', 10, 10', 17, 17') s'étendent côte à côte, et dans lequel lesdites premières parties flexibles (13, 14) et secondes parties allongées (15, 16) des premier et second ensembles de câble d'entraînement (7, 8) entraînent ensemble lesdits au moins premier et second éléments mobiles (41, 51), **caractérisé en ce que** les premier et second éléments mobiles (41, 51) sont positionnés côte à côte en rapport avec leur direction de déplacement et **en ce que** les secondes parties allongées (15, 16) des premier et second ensembles de câble d'entraînement (7, 8), qui sont également des parties flexibles, sont guidées à travers les seconds canaux de guidage (17, 17') qui s'étendent sur un trajet incurvé, dans lequel les premier et second canaux de guidage (9, 9', 10, 10', 17, 17') d'au moins l'un des ensembles de câble d'entraînement (7, 8) s'étendent côte à côte dans une portion transversale de la partie statique (3).

2. Système de toit ouvrant selon la revendication 1, dans lequel les premier et second ensembles de câble d'entraînement (7, 8) ont chacun une première partie flexible (13, 14) et au moins une seconde partie allongée (15, 16).

3. Système de toit ouvrant selon la revendication 1, dans lequel la première portion d'extrémité (13', 14') de la première partie flexible (13, 14) du premier ensemble de câble d'entraînement (7) est raccordée à l'un des premier et second éléments mobiles (41, 51), et dans lequel la seconde portion d'extrémité (13", 14") de la première partie flexible (13, 14) est raccordée, au moins pendant une partie du fonctionnement, à l'au moins une seconde partie allongée (15, 16) qui est raccordée à l'une des première et seconde parties mobiles (41, 51). (Figures 5, 6).

4. Système de toit ouvrant selon la revendication 3, dans lequel les premières parties flexibles (13, 14) des premier et second ensembles de câble d'entraînement (7, 8) sont raccordées au premier élément mobile (41) et les secondes parties allongées (15, 16) des premier et second ensembles de câble d'entraînement (7, 8) sont raccordées au second élément mobile (51).

5. Système de toit ouvrant selon la revendication 3, dans lequel la première partie flexible (13, 14) et la seconde partie (15, 16) de chacun des premier et second ensembles de câble d'entraînement (7, 8) sont raccordées à l'un des éléments mobiles (41, 51).

6. Système de toit ouvrant selon la revendication 3, dans lequel la première partie flexible (13, 14) du premier ensemble de câble d'entraînement (7) et la seconde partie allongée (15, 16) du second ensemble de câble d'entraînement (8) sont raccordées à l'un des éléments mobiles (41, 51).

7. Système de toit ouvrant selon la revendication 1, dans lequel la première partie flexible (13, 14) du premier ensemble de câble d'entraînement (7) est raccordée, pendant au moins une partie du fonctionnement, à au moins deux secondes parties allongées (15, 16).

8. Système de toit ouvrant selon la revendication 7, dans lequel les au moins deux secondes parties allongées (15, 16) sont raccordées à l'extrémité de la première portion d'extrémité (13', 14') de la première partie flexible (13, 14).

9. Système de toit ouvrant selon la revendication 1, dans lequel la première portion d'extrémité (13', 14') de la première partie flexible (13, 14) du premier ensemble de câble d'entraînement (7) est raccordée à l'un des premier et second éléments mobiles (41, 51), et dans lequel la première portion d'extrémité (13', 14') de la première partie flexible (13, 14) du second ensemble de câble d'entraînement (8) est raccordée, au moins pendant une partie du fonctionnement, à l'au moins une seconde partie allongée (15, 16) qui est raccordée à l'une des première et seconde parties mobiles (41, 51).

10. Système de toit ouvrant selon l'une quelconque des revendications précédentes, dans lequel le moteur (6) est positionné sensiblement entre les premier et second éléments mobiles (41, 51).

11. Système de toit ouvrant selon l'une quelconque des revendications précédentes, dans lequel les au moins premier et second éléments mobiles (41, 51) sont des pare-soleil enroulables ou des pare-soleil empilables.

12. Système de toit ouvrant selon la revendication 1, dans lequel la seconde partie allongée (15, 16) de l'ensemble de câble d'entraînement (7, 8) est séparée de la première partie (13, 14) et dans lequel la seconde partie allongée (15, 16) est temporairement raccordée à la première partie flexible (13, 14) par une partie de raccordement temporaire (27), de sorte que pendant un déplacement entre deux positions du premier élément mobile (41), la seconde partie allongée (15, 16) soit dégagée de la première partie flexible (13, 14), de sorte que le second élément mobile (51) soit sensiblement statique, la partie de raccordement temporaire (27) comportant un raccordement à broche et à fente et un guide de force empêchant ou permettant un raccordement/dégagement entre la première partie flexible (13, 14) et la seconde partie allongée (15, 16).
